# FASCICULE DE BREVET EUROPEEN

(11) **EP 0 484 243 B1**
(45) Date de publication et mention de la délivrance du brevet: **26.07.1995**
(21) Numéro de dépôt: 91402918.6
(22) Date de dépôt: 30.10.1991
(51) Int. Cl.: H01R 31/06

(54) **Prise courants faibles pour précâblage de bâtiment**
Schwachstromverbinder für die Vorverdrahtung eines Gebäudes
Low current connector for pre-wiring a building

(30) Priorité: 31.10.1990 FR 9013564
(43) Date de publication de la demande: 06.05.1992
(73) Titulaire: Nozick, Jacques E., F-75005 Paris (FR)
(72) Inventeur: Nozick, Jacques E., F-75005 Paris (FR)
(74) Mandataire: Pinguet, André

(56) Documents cités:
- EP-A- 0 100 802
- WO-A-88/02190

## Description

La présente invention concerne une prise courants faibles pour le précâblage de bâtiment.

Le précâblage en courants faibles d'un bâtiment consiste à le doter, si possible dès sa construction, d'un réseau de câbles de communication et de prises qui puisse s'adapter pendant une durée importante (par exemple cinquante ans) à la connexion de tous types de matériels ayant à communiquer ensemble ou avec l'extérieur, tels que téléphones, postes informatiques ou bureautiques, automates de gestion technique de bâtiment, appareils de transmission d'image, etc., et ce en tout point du bâtiment.

Pour cela, le réseau précâblé doit être systématisé dans tout le bâtiment, de façon que chaque pièce comporte une ou plusieurs prises de connexion dotée chacune d'au moins un connecteur. Un problème technique important est la standardisation des prises, vu la grande variété des connecteurs courants faibles existants sur le marché : on estime qu'il existe plus de vingt types de connecteurs différents, et d'autres connecteurs apparaîtront certainement dans les années à venir.

Jusqu'ici, les prises ont été raccordées aux câbles du réseau précâblé (généralement des câbles quatre paires ou deux fois quatre paires, ou d'autres types de câbles) d'une des trois façons suivantes :
-1- Câblage direct de prises spécifiques d'un connecteur : chaque connecteur des prises est relié directement aux câbles du réseau précâblé. Dans ce cas, il est nécessaire de changer la prise et de recâbler une nouvelle prise si l'on veut brancher un matériel ayant un connecteur ne correspondant pas au connecteur de la prise déjà installée ;
-2- Emploi d'une barrette intermédiaire de contacts sur lesquels sont connectés les conducteurs d'un câble du réseau précâblé et des conducteurs reliant lesdits contacts à une prise spécifique d'un connecteur : il faut aussi changer la prise et recâbler une nouvelle prise si l'on veut utiliser un autre connecteur que celui qui correspond à la prise, mais le recâblage est facilité et rendu plus rapide par la barrette de contacts, notamment si les contacts sont auto-dénudants ;
-3- Raccordement du réseau précâblé à un type unique de connecteur intermédiaire spécifique situé à l'intérieur du boîtier des prises. Le boîtier des prises contient des connecteurs d'interface qui s'enfichent sur ledit connecteur intermédiaire, et permettent de brancher des appareils sur le réseau précâblé. Lorsqu'on change l'appareil branché sur le réseau, si le nouvel appareil utilise un connecteur différent, il faut changer le connecteur d'interface, mais ce changement est très rapide puisqu'il s'effectue par simple enfichage d'un nouveau connecteur sur le connecteur intermédiaire, sans avoir besoin de toucher au câblage.

Le document WO-A- 88/02 190 illustre un exemple typique de cette dernière solution. Mais de telles prises présentent plusieurs inconvénients. Tout d'abord, le connecteur intermédiaire est spécifique d'un constructeur particulier et spécifiquement prévu pour être utilisé comme connecteur intermédiaire dans une prise. De ce fait, il est produit en série relativement faible, et il est relativement coûteux. En outre, la prise est spécifiquement adaptée à recevoir des connecteurs d'interface de type dit "modular jack", qui sont de petite taille. Et du fait que lesdits connecteurs d'interface sont situés à l'intérieur du boîtier de la prise, il ne serait pas possible de les remplacer par des connecteurs d'interface plus encombrants. De ce fait, s'il est nécessaire de brancher sur le réseau précâblé un apparail doté d'un connecteur plus encombrant, il faut démonter toute la prise et la remplacer par une prise dotée du connecteur souhaité. Par ailleurs, la prise divulguée par le document WO-A- 88/02 190 doit être démontée lorsqu'on doit remplacer un connecteur d'interface, ce qui peut conduire à des détériorations de ladite prise.

La présente invention a pour but de résoudre ces problèmes techniques.

La présente invention a pour objet une prise courants faibles pour précâblage de bâtiment, caractérisée en ce qu'elle comporte :
- une embase fixe comportant une partie avant dotée d'un premier connecteur intermédiaire relié à un câble d'un réseau précâblé, ledit câble étant doté de plusieurs conducteurs, et
- un boîtier adaptateur externe amovible comportant une partie arrière, pouvant être fixée en regard de la partie avant de l'embase, ladite partie arrière étant dotée d'un second connecteur intermédiaire complémentaire dudit premier connecteur intermédiaire, et adapté à se connecter audit premier connecteur intermédiaire lorsque le boîtier adaptateur est fixé sur l'embase, ledit boîtier adaptateur comportant en outre un dispositif électrique relié audit second connecteur intermédiaire pour communiquer avec le réseau précâblé.

Avantageusement, l'embase comporte des contacts auto-dénudants doubles et des conducteurs reliés audit premier connecteur intermédiaire, chaque contact auto-dénudant étant adapté à recevoir un conducteur relié au premier connecteur intermédiaire et un conducteur du câble. Selon une autre variante, l'embase comporte des contacts auto-dénudants triples et des conducteurs reliés audit premier connecteur intermédiaire, chaque contact auto-dénudant étant adapté à recevoir un conducteur relié au premier connecteur intermédiaire et un conducteur du câble et chaque contact auto-dénudant étant en outre adapté à recevoir un conducteur en dérivation vers une autre prise. Dans ces deux formes de réalisation, il peut être avantageux que les conducteurs du câble soient fixés à un capuchon-outil qui facilite leur mise en place dans l'embase.

Selon une forme de réalisation avantageuse, le boîtier adaptateur comporte une partie avant distincte de la partie arrière dudit boîtier adaptateur et fixée à ladite partie arrière, et ladite partie arrière est indépendante dudit dispositif électrique.

Le boîtier adaptateur de la prise peut en outre comporter des contacts auto-dénudants doubles sur lesquels sont connectés d'une part des conducteurs reliés au second connecteur intermédiaire, et d'autre part des conducteurs reliés audit dispositif électrique.

Avantageusement le câble comporte un drain d'écran, et ladite prise comporte des moyens de conduction qui relient le drain d'écran du câble au dispositif électrique. Selon une autre forme de réalisation particulière, l'embase et le boîtier adaptateur sont assemblés par vissage, et lesdits moyens de conduction sont une vis, une douille correspondante et un contact auto-dénudant en contact avec ladite douille, le drain d'écran du câble étant connecté audit contact auto-dénudant et un conducteur reliant la vis audit dispositif électrique.

L'embase peut comporter un volet d'occultation du premier connecteur intermédiaire.

Avantageusement, lesdits premier et second connecteurs intermédiaires sont des connecteurs standards, par exemple de type "modular jack".

Selon une forme de réalisation particulièrement avantageuse, l'un desdits premier et second connecteurs intermédiaires est un connecteur mâle de type "modular jack" comportant une languette élastique de verrouillage et ladite prise comporte des moyens pour escamoter ladite languette élastique de verrouillage et la rendre inopérante, de façon que lesdits premier et second connecteurs intermédiaires puissent être désaccouplés par simple coulissement relatif.

Selon une autre forme de réalisation, l'un desdits premier et second connecteurs intermédiaires est un connecteur mâle de type "modular jack" comportant normalement une languette élastique de verrouillage et modifié de façon à ne pas comporter ladite languette élastique de verrouillage, de façon que lesdits premier et second connecteurs intermédiaires puissent être désaccouplés par simple coulissement relatif.

Le dispositif électrique que comporte le boîtier adaptateur et qui communique avec le réseau précâblé peut être un connecteur accessible depuis l'extérieur, un câble ou un capteur.

D'autres caractéristiques et avantages apparaîtront à la lecture de la description détaillée suivante d'une forme de réalisation particulière de l'invention, donnée à titre d'exemple non limitatif, en regard des dessins joints.

Sur les dessins :
- la figure 1 est une vue d'une prise selon une forme de réalisation particulière de l'invention, coupée selon la ligne I-I de la figure 2,
- la figure 2 est une vue de la prise de la figure 1, en coupe selon la ligne II-II de la figure 1,
- la figure 3 est une vue schématique de détail représentant la mise en place des conducteurs du câble par un capuchon-outil,
- la figure 4 est une vue de face de l'embase des figures 1 et 2,
- les figures 5 et 6 sont des vues schématiques représentant des connecteurs de type "modular jack", respectivement mâle et femelle,
- la figure 7 est une vue en coupe d'une variante du boîtier adaptateur des figures 1 et 2,
- la figure 8 est une vue schématique d'une variante de contact autodénudant utilisable dans l'embrase de la prise selon l'invention, et
- les figures 9 et 10 représentent des variantes de la prise selon l'invention.

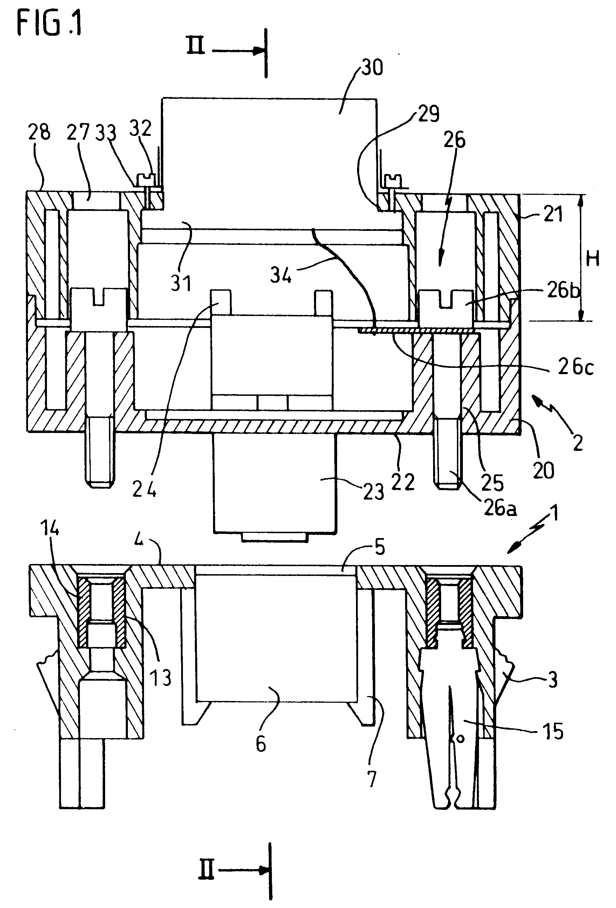

En référence à la figure 1, la prise courant faible selon l'invention se compose d'une embase 1 et d'un boîtier adaptateur 2. Ces deux pièces sont généralement réalisées en matière plastique moulée, mais pourraient être réalisées autrement sans sortir du cadre de la présente invention.

L'embase 1 est généralement emboîtée dans un boîtier de raccordement (non représenté) fixé au mur ou sur une borne, ou placé dans un plancher technique. La fixation de l'embase 1 au boîtier de raccordement peut être réalisée par exemple à l'aide d'ergots encliquetables élastiques 3 de l'embase 1.

L'embase 1 comporte une face avant 4, qui est seule visible de l'extérieur lorsque l'embase 1 est encliquetée sur le boîtier de raccordement, et qui est dotée d'une ouverture 5 occupée par un connecteur intermédiaire 6, ici de type femelle, qui s'étend vers l'intérieur du boîtier de raccordement à partir de la face avant 4, et qui est fixé à l'embase 1, par exemple par encliquetage à l'aide de bras élastiques 7. En variante, le connecteur intermédiaire 6 peut être moulé directement dans la face avant 4 de l'embase 1.

Le connecteur 6 est un connecteur de communication standard, c'est-à-dire un connecteur mâle ou femelle répondant à une norme ou d'un type largement utilisé et adapté à être connecté à un appareil externe par l'intermédiaire d'un connecteur complémentaire relié audit appareil. Lorsque ledit connecteur 6 se trouve correspondre au connecteur de l'appareil externe à relier à un réseau précâblé, on peut ainsi éventuellement se passer du boîtier adaptateur 2, ce qui représente une économie substantielle si le connecteur 6 est d'un type largement répandu.

Par exemple le connecteur intermédiaire 6 pourra être d'un type généralement appelé "modular jack", quelquefois "RJ 45" ou "miniature jack", qui a été adopté par la "US Federal Communication Commission" comme connecteur standard pour connecter les équipements téléphoniques aux lignes téléphoniques (Code of Federal Regulations - 47 CFR, part 68, subpart F - Connectors). Ce type de connecteur a également été choisi dans la norme ISO 8877 pour l'accès au réseau numérique avec intégration des services (RNIS). Il comporte généralement 4, 6 ou 8 contacts. Dans la forme de réalisation de l'invention décrite ici, le connecteur 6 "modular jack" utilisé comporte 8 contacts, bien que cette caractéristique ne soit en aucune façon limitative.

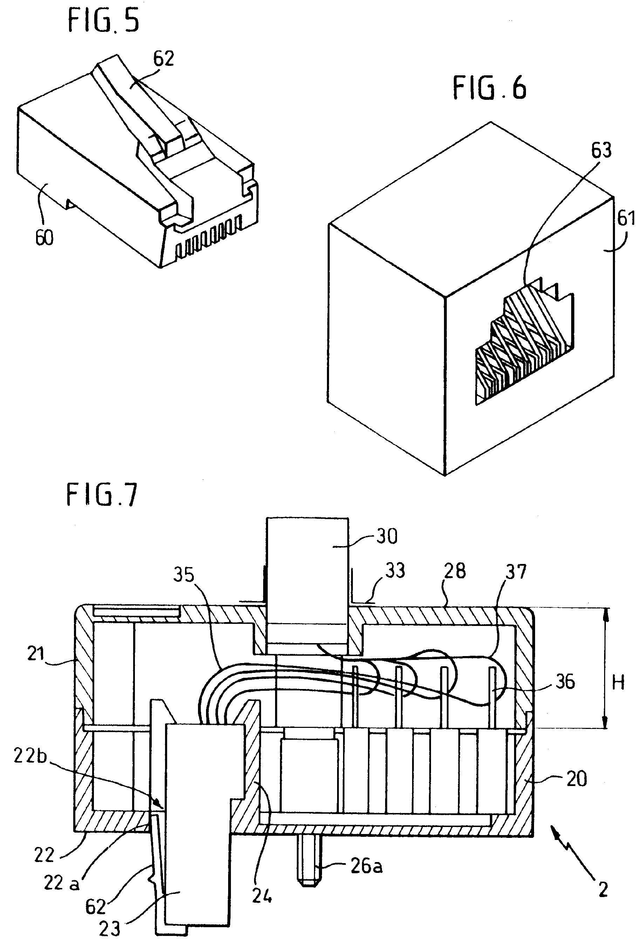

Les figures 5 et 6 représentent schématiquement respectivement un connecteur mâle de type "modular jack" et un connecteur femelle de même type. Le connecteur mâle 60 comporte une languette élastique de verrouillage 62, adaptée à s'encliqueter dans un logement 63 du connecteur femelle 61 lorsque le connecteur mâle est enfiché dans le connecteur femelle.

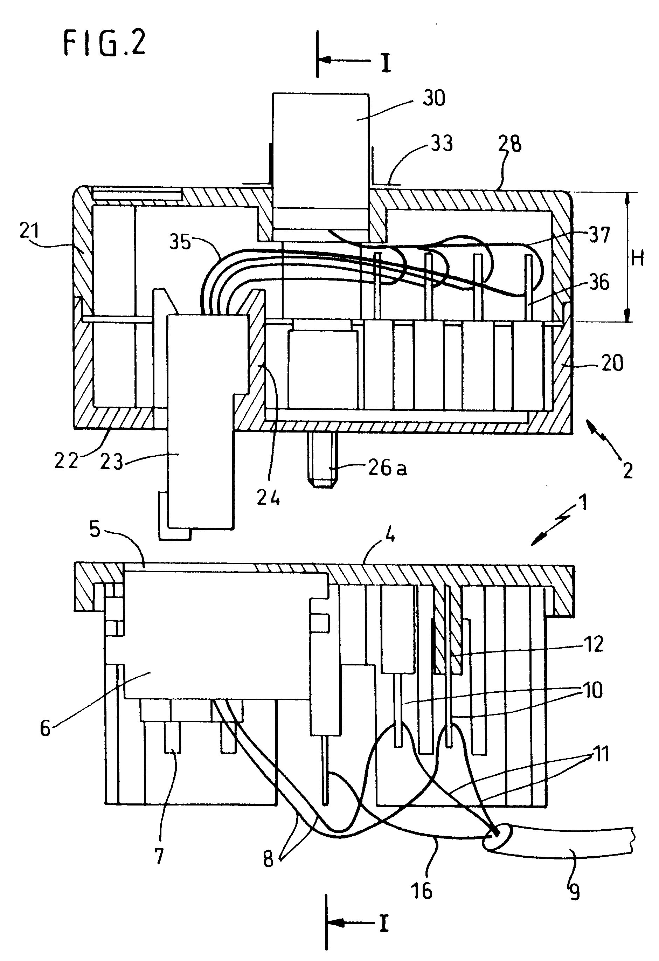

En référence à la figure 2, dans la forme de réalisation particulière présentée ici, le connecteur 6 est relié à quatre paires de conducteurs 8, dont seulement deux conducteurs 8 sont représentés sur la figure 2, par souci de clarté. Les quatre paires de conducteurs 8 peuvent provenir directement d'un câble 9 du réseau précâblé ; ou bien, plus avantageusement, les huit conducteurs 8 peuvent se connecter respectivement sur huit contacts auto-dénudants doubles 10, comme par exemple les contacts auto-dénudants décrits dans la demande de brevet français N° 90.8502 déposée le 4 juillet 1990, et sur les huit contacts auto-dénudants 10 se connectent à leur tour huit conducteurs 11 du câble 9. Seulement deux conducteurs 11 sont représentés sur la figure 2, par souci de clarté.

Les contacts auto-dénudants doubles 10 sont fixés à l'embase 1, par exemple par emboîtement en force dans des logements 12 de l'embase 1, de forme sensiblement complémentaire de la forme des contacts auto-dénudants 10. L'avantage d'utiliser des contacts auto-dénudants doubles 10 plutôt que de relier directement les conducteurs 11 du câble 9 au connecteur 6 réside dans le fait qu'ainsi, l'on peut changer à la demande l'ordre de branchement des fils (fonction de répartition).

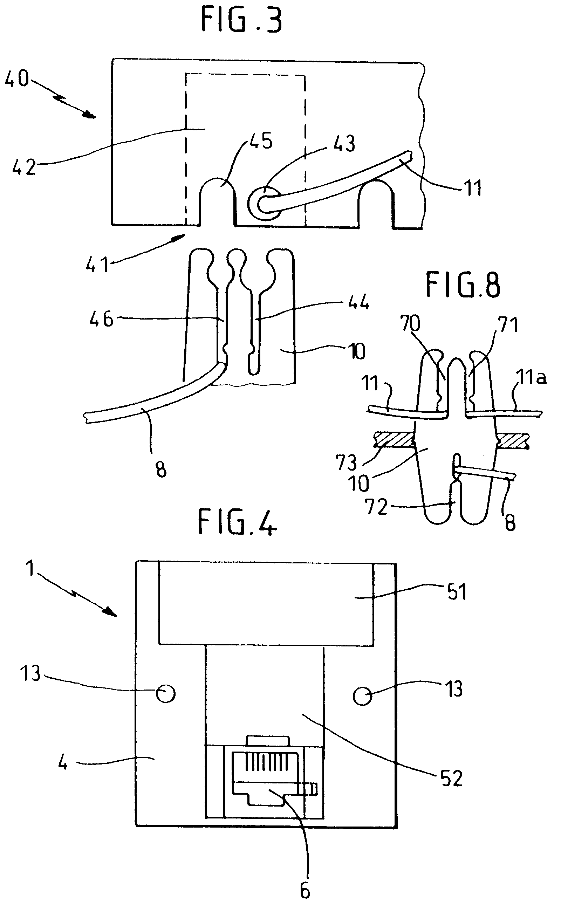

Avantageusement, les conducteurs 11 du câble 9 sont mis en place à l'aide d'un capuchon-outil 40, représenté schématiquement sur la figure 3 et décrit en détail dans le document EP-A- 0 100 802. En référence à la figure 3, le capuchon-outil 40 est une pièce moulée en matière plastique qui est adaptée à coiffer les contacts auto-dénudants 10. Pour cela, le capuchon-outil 40 comporte des évidements 41 de forme adaptée à recevoir les contacts auto-dénudants 10. Les évidements 41 sont limités latéralement par deux parois latérales 42 du capuchon-outil 40. Pour chaque évidement, les parois latérales 42 comportent deux trous alignés 43, qui permettent le passage d'un conducteur 11 du câble 9 et l'insertion dudit conducteur 11 dans une fente auto-dénudante 44 d'un contact auto-dénudant 10 lorsque ledit capuchon-outil 40 vient coiffer ledit contact auto-dénudant 10. Pour chaque évidement, les parois latérales 42 comportent en outre deux échancrures alignées 45 qui viennent chevaucher un conducteur 8 provenant du connecteur intermédiaire femelle 6, déjà inséré dans la deuxième fente auto-dénudante 46 dudit contact auto-dénudant 10. Ainsi, les huit conducteurs 11 du câble 9 peuvent être insérés simultanément et rapidement sur les huit contacts auto-dénudants 10, en supprimant en outre les risques de mettre accidentellement un conducteur 11 dans une fente 46 contenant déjà un conducteur 8, ce qui est une source de mauvais contact. De plus, le capuchon-outil 40 reste en place après insertion des conducteurs, et participe au maintien des conducteurs dans les contacts auto-dénudants 10.

Comme représenté sur la figure 1, l'embase 1 comporte en outre deux alésages 13 qui débouchent sur sa face avant 4. Dans chaque alésage 13 est insérée en force une douille 14 filetée intérieurement, dont l'utilité sera vue plus loin. En outre, dans une des douilles 14 est inséré en force un contact auto-dénudant simple 15, qui reçoit un conducteur 16 de drain d'écran du câble 9, relié à la terre (voir figure 2).

Comme représenté sur la figure 4, la face avant 4 de l'embase 1 peut comporter un porte-étiquette 51 transparent. Avantageusement, un volet d'occultation 5 peut coulisser sur la face avant 4 entre une position basse où il occulte le connecteur intermédiaire femelle 6, et une position haute où il permet l'enfichage d'un connecteur mâle complémentaire dans ledit connecteur intermédiaire femelle 6. Ainsi, le connecteur intermédiaire femelle 6 est protégé d'éventuelles agressions de l'environnement, telles que poussières, chocs, etc...

Le boîtier adaptateur 2 se compose de deux parties 20 et 21 assemblées par tout moyen connu, par exemple par encliquetage, soudage ultrasons ou collage. Une des deux parties 20 du boîtier adaptateur 2 comporte une face arrière 22, de forme extérieure identique à celle de la face avant 4 de l'embase 1, qui se place en regard de la face avant 4 de l'embase 1 lorsque le boîtier adaptateur 2 est assemblé à l'embase 1, tandis que l'autre partie 21 possède une face avant 28. La face arrière 22 comporte une ouverture qui laisse le passage à un connecteur intermédiaire correspondant au connecteur 6, avantageusement de type "modular jack" 23, qui fait saillie à l'extérieur du boîtier adaptateur 2. Le connecteur intermédiaire 23 est fixé au boîtier adaptateur 2 par des bras encliquetables 24 et par butée contre la face arrière 22 dudit boîtier 2.

Selon une forme de réalisation de l'invention, le connecteur 23 est un connecteur mâle de type "modular jack", mais ne comporte pas de languette élastique de verrouillage 62, à la différence des connecteurs mâles de type "modular jack" qui se trouvent habituellement dans le commerce, afin de pouvoir coulisser librement dans le connecteur intermédiaire femelle 6 de l'embase 1 : la suppression dudit dispositif élastique d'encliquetage est une modification peu coûteuse, et ne grève pas le coût de la prise.

Selon une autre forme de réalisation avantageuse de l'invention, le connecteur 23 est un connecteur mâle de type "modular jack", qui possède une languette de verrouillage 62, comme représenté sur la figure 7, mais le boîtier adaptateur 2 est adapté à escamoter ladite languette de verrouillage 62. Par exemple, un bord 22a de l'ouverture 22b ménagée dans la face arrière du boîtier 2 pour laisser le passage au connecteur 23, appuie en permanence sur la languette 62, de façon à la rendre inopérante. Ainsi, le connecteur 23 peut coulisser librement dans le connecteur 6. On peut ainsi employer un connecteur mâle "modular jack" 23 non modifié.

En référence à la figure 1, la partie 20 du boîtier adaptateur 2 comporte en outre deux alésages 25, en regard des douilles 14 de l'embase 1. Chaque alésage est traversé par une tige filetée 26a d'une vis 26. La vis 26 comporte une tête 26b plus large que l'alésage 25 et qui est à l'intérieur du boîtier adaptateur 2. Ainsi, le boîtier adaptateur 2 peut être mis en place sur l'embase 1 en emboîtant le connecteur intermédiaire mâle 23 dans le connecteur intermédiaire femelle 6, et en vissant les vis 26 dans les douilles 14 de l'embase 1 pour fixer le boîtier adaptateur 2 à l'embase 1. Pour cela, la face avant 28 du boîtier adaptateur 2 est dotée de deux orifices 27 qui permettent d'accéder aux têtes 26b des vis 26 à l'aide d'un tournevis. Une des vis 26 possède une cosse 26c qui est serrée entre ladite vis 26 et la partie 20 du boîtier adaptateur 2 lorsque la vis 26 est vissée à fond sur sa douille 14.

La face avant 28 du boîtier adaptateur 2 comporte en outre une ouverture 29 qui laisse le passage à un connecteur externe 30, sur lequel peut s'enficher un connecteur complémentaire d'un appareil à brancher sur le réseau précâblé: le connecteur externe 30 peut être de tout type, par exemple SUBD 9 points, SUBD 15 points, SUBD 25 points, DIN 5 points, connecteur de câble coaxial, etc. Il peut être un connecteur purement électique, ou électro-optique dans le cas où il sert d'interface avec un câble optique.

Lorsque l'on veut connecter sur la prise un appareil nécessitant un connecteur externe 30 différent du connecteur externe 30 existant, il suffit de dévisser les vis 26 pour remplacer le boîtier adaptateur 2 par un nouveau boîtier adaptateur 2 ayant un connecteur externe convenable. Ce remplacement est facile et rapide, et ne comporte pas de manipulation de conducteurs électriques : il ne présente donc pas de risque de création de faux contacts. Par ailleurs, l'assemblage du boîtier adaptateur 2 sur l'embase 1 par vissage assure une bonne tenue mécanique de la prise, de sorte que les deux connecteurs intermédiaires 6 et 23 accouplés ne sont jamais sollicités mécaniquement.

Le connecteur externe 30 est fixé au boîtier adaptateur 2 de façon spécifique pour chaque type de connecteur. Par exemple, comme représenté sur la figure 1, le connecteur externe 30 possède une base 31 élargie qui se trouve à l'intérieur du boîtier adaptateur 2 et qui ne peut pas passer au travers de l'ouverture 29 de la face avant 28 : la base élargie 31 est maintenue en butée contre la face avant 28 du boîtier adaptateur 2 par deux vis 32. Eventuellement, un embout 33 métallique entourant le connecteur externe 30 peut être interposé entre les vis 32 et la face avant 28. Dans le cas où le connecteur externe 30 est cylindrique, l'embout 33 peut être fileté intérieurement et vissé sur le connecteur externe 30.

D'une manière générale, la forme de l'ouverture 29 du boîtier adaptateur 2 ainsi que l'épaisseur H de la partie 21 dudit boîtier adaptateur 2 dépendent du connecteur externe 30 utilisé. Par contre, la partie 20 dudit boîtier adaptateur 2 est indépendante du connecteur externe 30 : ainsi, la partie 20 peut être produite en grande série, à faible coût.

Le raccordement électrique du connecteur externe 30 peut se faire de diverses façons. Tout d'abord, dans le cas où le connecteur externe 30 doit être raccordé à la terre, un conducteur 34 peut être raccordé à la fois à un contact de terre du connecteur externe 30 et à la cosse 26c, qui est en contact électrique avec la terre par l'intermédiaire de la vis 26 sur laquelle la cosse est assemblée, de la douille 14 correspondante, du contact auto-dénudant simple 15 et du conducteur 16 de drain d'écran du câble 9. Cette disposition est avantageuse car elle évite l'emploi de connecteurs intermédiaires mâle et femelle 23 et 6 qui aient un neuvième contact pour la terre : de tels connecteurs intermédiaires sont en effet plus coûteux que des connecteurs de type "modular jack" classiques à huit contacts.

Par ailleurs, huit conducteurs 35 sortent du connecteur intermédiaire mâle 23, seulement quatre des conducteurs 35 étant représentés sur la figure 2, par souci de clarté. Ces conducteurs 35 peuvent être raccordés directement au connecteur externe 30. Plus avantageusement, ils peuvent être connectés sur des contacts auto-dénudants doubles 36 fixés à la partie 20 du boîtier adaptateur 2, et d'autres conducteurs 37 repartent des contacts auto-dénudants 36 vers le connecteur externe 30. Ceci permet d'une part d'utiliser des codes de couleurs différents pour les conducteurs 37 reliés au connecteur externe 30 et pour les conducteurs 35 reliés au connecteur intermédiaire mâle 23. Mais surtout, cette disposition permet d'avoir des parties 20 du boîtier adaptateur 2 précâblées de façon identique pour plusieurs connecteurs externes différents, ce qui permet le précâblage de la partie 20 en grandes séries et donc diminue le coût de fabrication. Lors de l'assemblage du boîtier adaptateur 2, il ne reste donc qu'à connecter les conducteurs 37 reliés au connecteur externe 30 sur les contacts auto-dénudants doubles 36, ce qui est facile et rapide.

En variante, les conducteurs 35 qui sortent du connecteur intermédiaire mâle 23 peuvent se connecter à un circuit imprimé, placé à l'intérieur du boîtier adaptateur 2, raccordé aux conducteurs 37 qui sortent du connecteur externe 30. Cette disposition permet d'intercaler entre les connecteurs 23 et 30 des éléments actifs tels que des "BALUN", c'est à dire des transformateurs qui permettent d'envoyer un signal sur un câble coaxial.

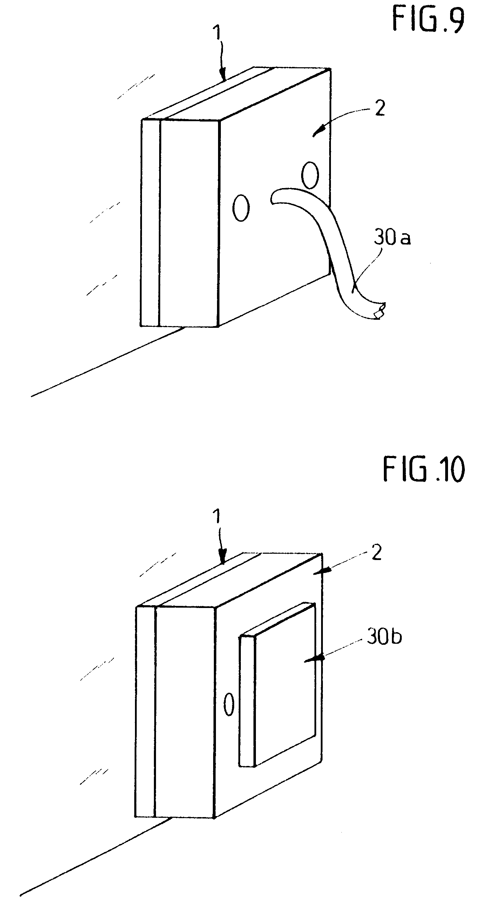

La prise selon l'invention peut certes être utilisée pour connecter un appareil utilisant un connecteur mâle de type "modular jack". Dans ce cas, le boîtier adaptateur 2 peut tout simplement être enlevé, et le connecteur mâle "modular jack" de l'appareil peut être enfiché directement sur le connecteur intermédiaire femelle 6 de l'embase 1. Plus avantageusement, comme représenté sur la figure 9, le câble de liaison 30a de l'appareil sera connecté directement au connecteur intermédiaire mâle 23 d'un boîtier adaptateur 2 qui ne comporte alors plus de connecteur externe 30, ledit câble de liaison étant lié mécaniquement au boîtier adaptateur 2. Cette disposition permet d'éviter l'endommagement du connecteur mâle "modular jack", possible avec un connecteur "modular jack" mâle classique tenu simplement par encliquetage dans un connecteur femelle, mais beaucoup plus difficile dans le cas présent, où le connecteur mâle "modular jack" est solidaire du boîtier 2 et le boîtier 2 vissé à l'embase 1 qui porte le connecteur "modular jack" femelle.

Selon une autre variante de l'invention, représentée sur la figure 10, le connecteur externe 30 pourrait être remplacé par un appareil 30b tel qu'un capteur de température, un détecteur d'intrusion (capteur radar, infrarouge, ultrasons, etc.) pour système d'alarme , ou un autre capteur. Lorsque le capteur est un détecteur d'intrusion pour système d'alarme, il est avantageux que le dévissage des vis 25 provoque le déclenchement de l'alarme : on pourra par exemple connecter le détecteur d'intrusion en série avec au moins une vis 26 et la douille 14 dans laquelle elle est visée, de façon que le contact soit coupé lorsque la vis 26 est dévissée de sa douille 14.

Selon une autre variante, le boîtier 2 peut ne pas comporter de vis 26, et la fixation du boîtier 2 sur l'embase peut se faire par encliquetage.

Selon une autre variante, les contacts auto-dénudants 10 de l'embase 1 sont triples, c'est-à-dire qu'ils permettent d'accueillir trois fils conducteurs. Par exemple comme représenté sur la figure 8, les contacts 10 peuvent comporter deux fentes 70, 71 pouvant être dirigées vers l'arrière de l'embase 1, et une fente 72 pouvant être dirigée vers la face avant 4 de l'embase 1. Le contact 10 pourra être fixé à l'embase 1 par tout moyen, par exemple par encliquetage ou emboîtement à force dans une paroi 73 pouvant être formée avec l'embase 1 ou rapportée sur l'embase 1. De tels contacts 10 triples sont particulièrement avantageux en ce qu'ils permettent de faire des dérivations de prise à prise. Ainsi, la fente avant 72 du contact 10, qui est la moins accessible puisque située en regard de la face avant 4 de l'embase 1, peut accueillir un conducteur 8 relié au connecteur intermédiaire 6 de l'embase, tandis qu'une des fentes arrière 70 accueille un conducteur 11 du câble 9. Lorsqu'on veut brancher une prise en dérivation (dite prise dérivée) sur la prise à laquelle appartient le contact 10 (dite prise principale), il suffit de connecter des conducteurs 11a a dans les fentes 71 de chaque contact 10 (éventuellement dans les fentes 71 d'une partie seulement des contacts 10) de la prise principale, et de connecter les mêmes conducteurs 11a dans des fentes 70 arrières de contacts 10 correspondants dans la prise dérivée. A partir de la prise dérivée, il est possible de réaliser une autre dérivation vers une troisième prise, etc.

## Revendications

1. Prise courants faibles pour précâblage de bâtiment, caractérisée en ce qu'elle comporte :
- une embase (1) fixe comportant une partie avant (4) dotée d'un premier connecteur intermédiaire (6) relié à un câble (9) d'un réseau précâblé, ledit câble étant doté de plusieurs conducteurs (11), et
- un boîtier adaptateur (2) externe amovible comportant une partie arrière (20), pouvant être fixée en regard de la partie avant (4) de l'embase, ladite partie arrière (20) étant dotée d'un second connecteur intermédiaire (23) complémentaire dudit premier connecteur intermédiaire (6), et adapté à se connecter audit premier connecteur intermédiaire (6) lorsque le boîtier adaptateur (2) est fixé sur l'embase (1), ledit boîtier adaptateur (2) comportant en outre un dispositif (30) électrique relié audit second connecteur intermédiaire (23) pour communiquer avec le réseau précâblé.

2. Prise selon la revendication 1, caractérisée en outre en ce que l'embase (1) comporte des contacts auto-dénudants doubles (10) et des conducteurs (8) reliés audit premier connecteur intermédiaire (6), chaque contact auto-dénudant (10) étant adapté à recevoir un conducteur (8) relié au premier connecteur intermédiaire (6) et un conducteur (11) du câble (9).

3. Prise selon la revendication 1, caractérisée en outre en ce que l'embase comporte des contacts auto-dénudants triples et des conducteurs (8) reliés audit premier connecteur intermédiaire (6), chaque contact auto-dénudant (10) étant adapté à recevoir un conducteur (8) relié au premier connecteur intermédiaire (6) et un conducteur (11) du câble (9) et chaque contact auto-dénudant (10) étant en outre adapté à recevoir un conducteur (11a) en dérivation vers une autre prise.

4. Prise selon la revendication 2 ou la revendication 3, caractérisée en outre en ce que les conducteurs (11) du câble (9) sont fixés à un capuchon-outil (40) qui facilite leur mise en place dans l'embase (1).

5. Prise selon l'une quelconque des revendications précédentes, caractérisée en outre en ce que le boîtier adaptateur (2) comporte une partie avant (21) distincte de la partie arrière dudit boîtier adaptateur (32) et fixée à ladite partie arrière (20), et ladite partie arrière (20) est indépendante dudit dispositif électrique relié au second connecteur intermédiaire.

6. Prise selon l'une quelconque des revendications précédentes, caractérisée en outre en ce que le boîtier adaptateur (2) comporte des conducteurs (35) reliés au second connecteur intermédiaire, des conducteurs (37) reliés audit dispositif électrique (30), et des contacts auto-dénudants doubles (36), chaque contact auto-dénudant double étant adapté à recevoir d'une part un conducteur (35) relié au second connecteur intermédiaire (23), et d'autre part un conducteur (37) relié audit dispositif électrique (30).

7. Prise selon l'une quelconque des revendications précédentes, caractérisée en outre en ce que le câble (9) comporte un drain d'écran (16), et ladite prise comporte des moyens de conduction (26, 14, 15) qui relient le drain d'écran (16) du câble (9) au dispositif électrique (30).

8. Prise selon la revendication 7, caractérisée en outre en ce que l'embase (1) et le boîtier adaptateur (2) sont assemblés par vissage, et lesdits moyens de conduction sont une vis (26), une douille correspondante (14) et un contact auto-dénudant (15) en contact avec ladite douille ( 14), le drain d'écran (16) du câble (9) étant connecté audit contact auto-dénudant (15) et un conducteur (34) reliant la vis (26) audit dispositif électrique (30).

9. Prise selon l'une quelconque des revendications précédentes, caractérisée en outre en ce que l'embase (1) comporte un volet d'occultation (52) du premier connecteur intermédiaire (6).

10. Prise selon l'une quelconque des revendications précédentes, caractérisée en outre en ce que lesdits premier (6) et second (23) connecteurs intermédiaires sont des connecteurs standards.

11. Prise selon la revendication 10, caractérisée en outre en ce que lesdits premier (6) et second (23) connecteurs intermédiaires sont de type "modular jack".

12. Prise selon la revendication 11, caractérisée en outre en ce que l'un desdits premier (6) et second (23) connecteurs intermédiaires est un connecteur mâle de type "modular jack" comportant une languette élastique de verrouillage (62) et ladite prise comporte des moyens (22a) pour escamoter ladite languette élastique de verrouillage (62) et la rendre inopérante, de façon que lesdits premier (6) et second (23) connecteurs intermédiaires puissent être désaccouplés par simple coulissement relatif.

13. Prise selon la revendication 11, caractérisée en outre en ce que l'un desdits premier (6) et second (23) connecteurs intermédiaires est un connecteur mâle de type "modular jack" comportant normalement une languette élastique de verrouillage (62) et modifié de façon à ne pas comporter ladite languette élastique de verrouillage, de façon que lesdits premier (6) et second (23) connecteurs intermédiaires puissent être désaccouplés par simple coulissement relatif.

14. Prise selon l'une quelconque des revendications précédentes, caractérisée en outre en ce que ledit dispositif électrique est un connecteur (30) accessible depuis l'extérieur.

15. Prise selon l'une quelconque des revendications 1 à 13, caractérisée en outre en ce que ledit dispositif électrique est un câble (30a) relié à un appareil externe.

16. Prise selon l'une quelconque des revendications 1 à 13, caractérisée en outre en ce que ledit dispositif électrique est un capteur (30b).

## Patentansprüche

1. Schwachstromverbinder für die Vorverdrahtung eines Gebäudes, dadurch **gekennzeichnet**, daß er folgendes umfaßt:
- Einen fest angebrachten Sockel (1), der einen Vorderteil (4) umfaßt, welcher mit einem ersten Zwischenverbinder (6) versehen ist, der mit einem Kabel (9) eines vorverdrahteten Netzes verbunden ist, wobei das Kabel mehrere Leiter (11) aufweist, und
- ein lösbares, externes Adaptergehäuse (2), das einen hinteren Teil (20) aufweist, der am Vorderteil (4) des Sockels befestigt werden kann, wobei der hintere Teil (20) mit einem zweiten Zwischenverbinder (23) versehen ist, der zum ersten Zwischenverbinder (6) komplementär und geeignet ist, sich mit dem ersten Zwischenverbinder (6) zu verbinden, wenn das Adaptergehäuse (2) am Sockel befestigt wird, wobei das Adaptergehäuse (2) im übrigen eine elektrische Vorrichtung (30) umfaßt, die mit dem zweiten Zwischenverbinder (23) verbunden ist, um mit dem vorverdrahteten Netz in Verbindung zu treten.

2. Verbinder nach Anspruch 1, dadurch **gekennzeichnet**, daß weiterhin der Sockel (1) die Isolation selbsttätig durchdringende Doppelkontakte (10) und Leiter (8) umfaßt, die mit dem ersten Zwischenverbinder (6) verbunden sind, wobei jeder die Isolation selbsttätig durchdringende Kontakt (10) so ausgebildet ist, daß er einen Leiter (8), der mit dem ersten Zwischenverbinder (6) verbunden ist, und einen Leiter (11) des Kabels (9) aufnehmen kann.

3. Verbinder nach Anspruch 1, dadurch **gekennzeichnet**, daß weiterhin der Sockel die Isolation selbsttätig durchdringende Dreifachkontakte und Leiter (8) umfaßt, die mit dem ersten Zwischenverbinder (6) verbunden sind, wobei jeder die Isolation selbsttätig durchdringende Kontakt (10) so ausgebildet ist, daß er einen Leiter (8), der mit dem ersten Zwischenverbinder (6) verbunden ist, und einen Leiter (11) des Kabels (9) aufnehmen kann, und wobei weiterhin jeder die Isolation selbsttätig durchdringende Kontakt (10) so ausgebildet ist, daß er einen Leiter (11a) in Parallelverbindung zu einem anderen Verbinder aufnehmen kann.

4. Verbinder nach Anspruch 2 oder 3, dadurch **gekennzeichnet**, daß weiterhin die Leiter (11) des Kabels (9) an einem Kappen-Werkzeug (40) befestigt sind, das ihr Einsetzen in den Sockel (1) erleichtert.

5. Verbinder nach einem der vorhergehenden Ansprüche, dadurch **gekennzeichnet**, daß weiterhin das Adaptergehäuse (2) ein Vorderteil (21) umfaßt, das vom hinteren Teil des Adaptergehäuses (2) verschieden und an diesem hinteren Teil (20) befestigt ist, und daß der hintere Teil (20) von der elektrischen Vorrichtung unabhängig ist, die mit dem zweiten Zwischenverbinder verbunden ist.

6. Verbinder nach einem der vorhergehenden Ansprüche, dadurch **gekennzeichnet**, daß weiterhin das Adaptergehäuse (2) Leiter (35), die mit dem zweiten Zwischenverbinder verbunden sind, Leiter (37), die mit der elektrischen Vorrichtung (30) verbunden sind, und die Isolation selbsttätig durchdringende Doppelkontakte (36) umfaßt, wobei jeder die Isolation selbsttätig durchdringende Doppelkontakt geeignet ist, einerseits einen Leiter (35), der mit dem zweiten Zwischenverbinder (23) verbunden ist, und andererseits einen Leiter (37) aufzunehmen, der mit der elektrischen Vorrichtung (30) verbunden ist.

7. Verbinder nach einem der vorhergehenden Ansprüche, dadurch **gekennzeichnet**, daß das Kabel (9) weiterhin eine Abschirmung (16) umfaßt, und daß der Verbinder leitende Teile (26, 14, 15) aufweist, die die Abschirmung (16) des Kabels (9) mit der elektrischen Vorrichtung (30) verbinden.

8. Verbinder nach Anspruch 7, dadurch **gekennzeichnet**, daß weiterhin der Sockel (1) und das Adaptergehäuse (2) durch Verschrauben zusammengefügt sind, und daß die leitenden Teile von einer Schraube (26), einer entsprechenden Buchse (14) und einem die Isolation selbsttätig durchdringenden Kontakt (15) gebildet werden, der mit der Buchse (14) in Kontakt steht, wobei die Abschirmung (16) des Kabels (9) mit dem die Isolation selbsttätig durchdringenden Kontakt (15) verbunden ist und ein Leiter (34) die Schraube (26) mit der elektrischen Vorrichtung (30) verbindet.

9. Verbinder nach einem der vorhergehenden Ansprüche, dadurch **gekennzeichnet**, daß weiterhin der Sockel (1) eine Abdeckklappe (52) für den ersten Zwischenverbinder (6) umfaßt.

10. Verbinder nach einem der vorhergehenden Ansprüche, dadurch **gekennzeichnet**, daß weiterhin der erste Zwischenverbinder (6) und der zweite Zwischenverbinder (23) Standardverbinder sind.

11. Verbinder nach Anspruch 10, dadurch **gekennzeichnet**, daß weiterhin der erste Zwischenverbinder (6) und der zweite Zwischenverbinder (23) "Modular-Jack"-Verbinder sind.

12. Verbinder nach Anspruch 11, dadurch **gekennzeichnet**, daß weiterhin einer der beiden Zwischenverbinder (6, 23) ein eindringender "Modular-Jack"-Verbinder ist, der eine elastische Verriegelungslasche (62) umfaßt, und daß der Verbinder Mittel (22a) umfaßt, die dazu dienen, die elastische Verriegelungslasche (62) einzuziehen und in der Weise unwirksam zu machen, daß der erste und der zweite Zwischenverbinder (6, 23) durch eine einfache Relativverschiebung voneinander entkoppelt werden können.

13. Verbinder nach Anspruch 11, dadurch **gekennzeichnet**, daß weiterhin einer der Zwischenverbinder (6, 23) ein eindringender "Modular-Jack"-Verbinder ist, der normalerweise eine elastische Verriegelungslasche (62) umfaßt und der so abgewandelt ist, daß er diese elastische Verriegelungszunge nicht aufweist, so daß der erste und zweite Zwischenverbinder (6, 23) durch eine einfache Relativverschiebung voneinander entkoppelt werden können.

14. Verbinder nach einem der vorhergehenden Ansprüche, dadurch **gekennzeichnet**, daß weiterhin die elektrische Vorrichtung ein elektrischer Verbinder (30) ist, der von außen her zugänglich ist.

15. Verbinder nach einem der Ansprüche 1 bis 13, dadurch **gekennzeichnet**, daß die elektrische Vorrichtung ein Kabel (30a) ist, das mit einem externen Apparat verbunden ist.

16. Verbinder nach einem der Ansprüche 1 bis 13, dadurch **gekennzeichnet**, daß weiterhin die elektrische Vorrichtung ein Sensor (30b) ist.

## Claims

1. A low-current receptacle for prewiring a building, the receptacle being characterized in that it comprises:
a fixed base (1) including a front portion (4) provided with a first intermediate connector (6) connected to a cable (9) of a prewired network, said cable being provided with a plurality of conductors (11); and
a removable external adaptor housing (2) including a rear portion (20) suitable for fixing over the front portion (4) of the base, said rear portion (20) being provided with a second intermediate connector (23) complementary to said first intermediate connector (6) and being adapted to connect to said first intermediate connector (6) when the adaptor housing (2) is fixed on the base (1), said adaptor housing (2) also including an electrical device (30) connected to said second intermediate connector (23) to communicate with the prewired network.

2. A receptacle according to claim 1, further characterized in that the base (1) includes two-slot insulation-displacement contacts (10) and conductors (8) connected to said first intermediate connector (6), each insulation-displacement contact (10) being adapted to receive a conductor (8) connected to the first intermediate connector (6) and one of the conductors (11) of the cable (9).

3. A receptacle according to claim 1, further characterized in that the base includes three-slot insulation-displacement contacts and conductors (8) connected to said first intermediate connector (6), each insulation-displacement contact (10) being adapted to receive a conductor (8) connected to the first intermediate connector (6) and a conductor (11) of the cable (9), and each insulation-displacement contact (10) being further adapted to receive a branch connector (11a) going to another receptacle.

4. A receptacle according to claim 2 or claim 3, further characterized in that the conductors (11) of the cable (9) are fixed to a cap-tool (40) which facilitates installing them on the base (1).

5. A receptacle according to any preceding claim, further characterized in that the adaptor housing (2) includes a front portion (21) which is distinct from the rear portion of said adaptor housing (32) and which is fixed to the rear portion (20), with said rear portion (20) being independent of said electrical device connected to the second intermediate connector.

6. A receptacle according to any preceding claim, further characterized in that the adaptor housing (2) includes conductors (35) connected to the second intermediate connector, conductors (37) connected to said electrical device (30), and two-slot insulation-displacement contacts (36), with each two-slot insulation-displacement contact being adapted to receive both a conductor (35) connected to the second intermediate connector (23) and a conductor (37) connected to said electrical device (30).

7. A receptacle according to any preceding claim, further characterized in that the cable (9) includes a screen drain (16), and said receptacle includes conduction means (26, 14, 15) connecting said cable screen drain (16) to the electrical device (30).

8. A receptacle according to claim 7, further characterized in that the base (1) and the adaptor housing (2) are assembled together by screws, and said conduction means comprise a screw (26), a corresponding bushing (14), and an insulation-displacement contact (15) in contact with said bushing (14), said cable screen drain (16) being connected to said insulation-displacement contact (15) and a conductor (34) connecting the screw (26) to said electrical device (30).

9. A receptacle according to any preceding claim, further characterized in that the base (1) includes a shutter (52) for shutting the first intermediate connector (6).

10. A receptacle according to any preceding claim, further characterized in that said first and second intermediate connectors (6, 23) are standard connectors.

11. A receptacle according to claim 10, further characterized in that said first and second intermediate connectors (6, 23) are "modular jack" type connectors.

12. A receptacle according to claim 11, further characterized in that said one of said first and second intermediate connectors (6, 23) is a "modular jack" type male connector including a resiliently locking tongue (62), and said receptacle includes means (22a) for retracting said resiliently locking tongue (62) and for making it inoperative so that said first and second intermediate connectors (6, 23) may be decoupled merely by relative sliding.

13. A receptacle according to claim 11, further characterized in that one of said first and second intermediate connectors (6, 23) is a "modular jack" type male connector normally including a resiliently locking tongue (62) and modified so as to no longer include said resilient locking tongue, thereby enabling said first and second intermediate connectors (6, 23) to be decoupled merely by relative sliding.

14. A receptacle according to any preceding claim, further characterized in that said electrical device is a connector (30) accessible from the outside.

15. A receptacle according to any one of claims 1 to 13, further characterized in that said electrical device is a cord (30a) connected to an external apparatus.

16. A receptacle according to any one of claims 1 to 13, further characterized in that said electrical device is a sensor (30b).
